Europäisches Patentamt

European Patent Office

Office européen des brevets

(11) Veröffentlichungsnummer: **0 308 696**
**A1**

(12) **EUROPÄISCHE PATENTANMELDUNG**

(21) Anmeldenummer: 88114168.3

(22) Anmeldetag: 31.08.88

(51) Int. Cl.⁴: **G02C 1/08**

(30) Priorität: 01.09.87 DE 3729116

(43) Veröffentlichungstag der Anmeldung:
**29.03.89 Patentblatt 89/13**

(84) Benannte Vertragsstaaten:
**ES GR**

(71) Anmelder: **Weber, Karl**
**Steinäcker 41g**
**D-7000 Stuttgart 75(DE)**

(72) Erfinder: **Weber, Karl**
**Steinäcker 41g**
**D-7000 Stuttgart 75(DE)**

(74) Vertreter: **Dreiss, Hosenthien & Fuhlendorf**
**Gerokstrasse 6**
**D-7000 Stuttgart 1(DE)**

(54) **Brille mit auswechselbaren Gläsern.**

(57) Es ist eine Brille (11) mit zwei separaten Gläsern (12, 13) beschrieben, die in der Innennute (16) der umlaufenden Fassungen (17) eines Brillengestells (20) gefasst sind, wobei die Fassungen (17) an zwei einander benachbarten Stellen mittels einer Klemmvorrichtung zum Einlegen der Gläser aufweitbar und zum Festhalten der Gläser zusammenziehbar sind.

Damit bei einer derartigen Brille (11) ohne die Gefahr von Gestellverformungen und ohne den Verlust an Gestellanpassungen die Gläser (12, 13) in zeitsparender und problemloser Weise sowohl montiert, als auch in einfacher Weise ausgewechselt werden können, ist vorgesehen, daß die Brücke (19), mit der die Klemmvorrichtung (14) verbunden ist, mit zwei parallel, senkrecht zur ihr verlaufenden und die benachbarten Stellen (29,30,33,34) überragenden Leisten (31,32) fest verbunden ist, an deren freiem Ende zwei Betätigungshebel angelenkt sind, daß die Anlenkung der Betätigungshebel (37,38) an den ortsfesten Stellen der geteilten Fassung (17,18) in Bewegungsrichtung der beweglichen Stelle (33,34) der geteilten Fassung (17,18) hinter der Anlenkung eines Zwischenhebels (49) an dieser beweglichen Stelle angeordnet ist, und daß die Betätigungshebel (37,38) in ihrer die Gläser (12,13) festhaltenden Geschlosenstellung an der Brücke (19) arretierbar sind.

FIG.1

## Brille mit auswechselbaren Gläsern

Die vorliegende Erfindung bezieht sich auf eine Brille mit zwei separaten Gläsern nach dem Oberbegriff des Anspruchs 1.

Bei einer derartigen aus der US-PS 2 730 012 bekannten brille sind zwei Betätigungshebel der Klemmvorrichtung durch die beiden Nasenauflagepads gebildet, die von oben nach unten in ihre Geschlossenstellung verschwenkt werden, wobei sich die beiden Zwischenhebel in entgegengesetzter Richtung, also nach oben bewegen.

Bei dieser Art von Verschlußmechanismus wird ein möglicherweise die Fassung verbiegender radialer Druck auf dei Fassung beim Verschließen ausgeübt. Desweiteren können die Pads nicht mehr individuell an die Nasenform des Trägers angepaßt werden, so daß der bekannte Verschlußmechanismus nur für Einfachstbrillen verwendbar ist.

Aufgabe der vorliegenden Erfindung ist es, eine Brille der eingangs genannten Art zu schaffen, mit der in zeitsparender und problemloser Weise die Gläser sowohl montiert als auch in einfacher Weise ausgewechselt werden können, ohne daß die Gefahr von Gestellverformungen besteht und ohne daß Möglichkeiten der Gestellanpassungen verloren gehen.

Zur Lösung dieser Aufgabe sind bei einer Brille der eingangs genannten Art die im Kennzeichen des Anspruchs 1 angegebenen Merkmale vorgesehen.

Auf diese Weise ist eine Brille mit zwei separaten Gläsern geschaffen, die den Wünschen des Optikers entgegenkommt, nämlich Brillen rationell, zeitsparend und problemlos fassen zu können, wobei die Brille dennoch individuell anpaßbar bleibt. Das Fassen erfolgt hier durch Öffnen der Klemmvorrichtung, Einsetzen der Gläser in einen Teil der Innennute der umlaufenden Fassung und durch Schließen der Klemmvorrichtung mit Hilfe des Betätigungshebels an der Brücke. Darüber hinaus ist diese einfache Art des Fassens auch für den Brillen tragenden Nichtfachmann geschaffen, ohne daß die Gefahr besteht, daß dieser das Gestell verbiegt, so daß im wesentlichen jeder Träger von Korrekturbrillen und/oder Sonnenbrillen entsprechend seinen Wünschen Gläser sich beschaffen und abwechselnd tragen kann. Bspw. können sowohl Sonnengläser als auch Korrekturgläser, die entsprechend der Helligkeit einen mehr oder weniger großen Lichtabsorbtionsgrad aufweisen, und es können Sonnengläser, die entsprechend dem Modetrend verschiedenartige Farben besitzen, austauschbar verwendet werden.

Für eine getrennte Auswechselbarkeit der beiden Gläser einer Brille sind die Merkmale gemäß Anspruch 2 vorgesehen. Dadurch ergibt sich gleichzeitig auch an einer Seite eine Führung für den betreffenden beweglichen Endteil der beiden Fassungen. In diesem Zusammenhang ist mit den Merkmalen gemäß Anspruch 3 zusätzlich erreicht, daß die beiden Betätigungshebel in beide seitlichen Richtungen fixiert sind.

Mit den Merkmalen des Anspruchs 4 ist erreicht, daß die jeweils beweglichen Endteile der beiden Fassungen auch an der gegenüberliegenden Seite geführt sind.

Die Merkmale des Anspruchs 5 ergeben eine konstruktiv einfache Übertragung der Bewegung des Zwischenhebels auf den beweglichen Endteil der betreffenden Fassung. Dabei ist der Schieberblock gemäß Anspruch 6 und/oder 7 ebenfalls geführt.

Gemäß Anspruch 8 ist eine unmittelbare Kraftübertragung, die nicht über die Schwenkachse geht, erreicht.

Gemäß einem weiteren Ausführungsbeispiel vorliegender Erfindung sind die Merkmale des Anspruchs 9 vorgesehen, mit denen eine Rastung des geschlossenen Betätigungshebels dadurch erreicht ist, daß ein gewisser Schnappeffekt beim Überwinden eines Druckpunktes erreicht ist. Diese Arretierung kann ausschließlich oder auch zusätzlich mit Hilfe der Merkmale des Anspruchs 10 erreicht werden.

Eine einfach Montage der gesammten Klemmvorrichtung ergibt sich dann, wenn gemäß einem weiteren Ausführungsbeispiel vorliegender Erfindung die Merkmale gemäß Anspruch 11 vorgesehen sind.

Weitere Einzelheiten der Erfindung sind der folgenden Beschreibung zu entnehmen, in der die Erfindung anhand des in der Zeichnung dargestellten Ausführungsbeispieles näher beschrieben und erläutert ist. Es zeigen:

Figur 1 in Vorderansicht eine Brille mit auswechselbaren Gläsern, gemäß einem bevorzugten Ausführungsbeispiel vorliegender Erfindung, wobei in der Darstellung das eine Glas bei geschlossener Klemmvorrichtung im Gestell eingesetzt und das andere Glas bei geöffneter Klemmvorrichtung aus dem Gestell herausgenommen ist,

Figur 2 in vergrößerter Darstellung eine Ansicht gemäß Pfeil II der Fig. 1,

Figur 3 in ebenfalls vergrößerter Darstellung einen Schnitt längs der Linie III-III der Fig. 1 und

Figur 4 in vergrößerter und auseinandergezogener Darstellung eine Draufsicht auf die Einzelteile der Klemmvorrichtung nach Fig. 1.

Die in der Zeichnung dargestellte Brille 11 ist mit zwei auswechselbaren Gläsern 12 und 13 versehen, deren Einsetzen bzw. Auswechseln in einfacher Weise nicht nur vom Optiker sondern auch von jedem Laien mit Hilfe einer Klemmvorrichtung 14 vorgenommen werden kann. Dabei sind die Gläser 12, 13 in einer Innennute 16 der Fassungen 17, 18 eines Brillengestells 20 eingelegt und bei geschlossener Klemmvorrichtung gefasst.

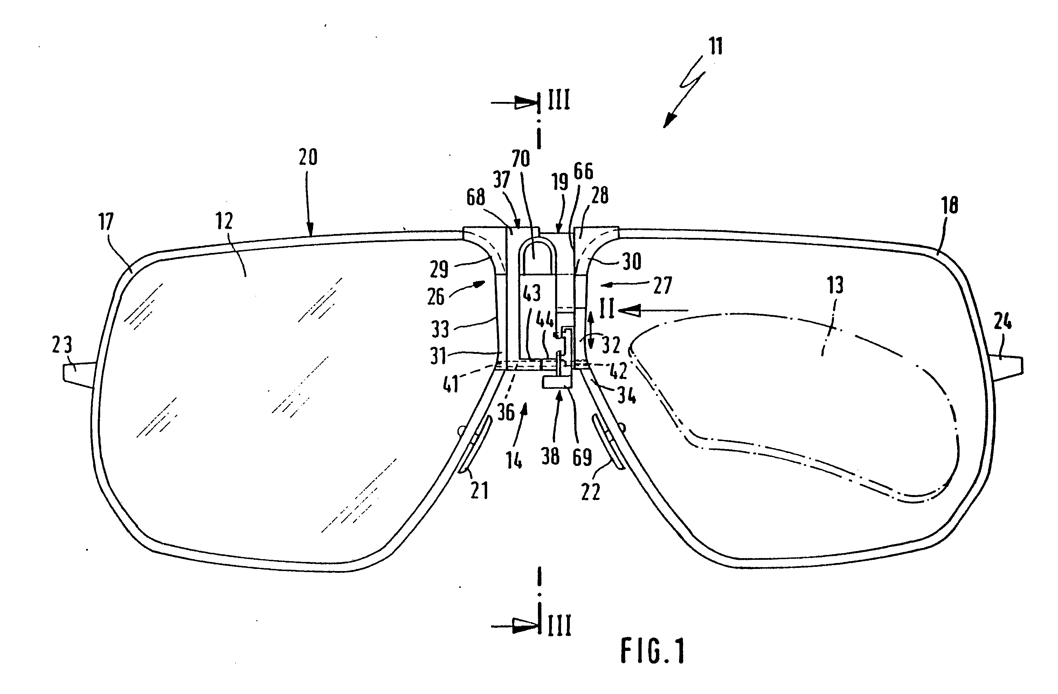

Gemäß der Zeichnung sind bei der Brille 11 gemäß einem bevorzugten Ausführungsbeispiel vorliegender Erfindung die Fassungen 17 und 18 des Gestells 20 über eine Brücke 19 miteinander verbunden. Fig. 1 zeigt noch Nasenauflagepads 21 und 22 und die Bügelansätze 23 und 24.

Die beiden Fassungen 17 und 18 sind an einem Umfangsbereich 26, 27 im Bereich der Brücke 19 geteilt. Dabei ist ein Querteil 28 der Brücke 19 mit dem jeweils einen, d.h. oberen gerundeten Endteil 29 bzw. 30 der im Umfangsbereich 26 bzw. 27 aufgeschnittenen Fassung 17 bzw. 18 fest verbunden. Die Brücke 19 ist im Bereich der Umfangsbereiche 26, 27 beider Fassungen 17, 18 mit zwei parallelen vorderen Leiste 31, 32 versehen, die senkrecht vom Querteil 28 abstehen und den jeweiligen anderen, d.h. unteren Endteil 33, 34 der Fassung 17, 18 überdecken, wobei sie deren Breite besitzen.

Zwischen diesen beiden vorderen Leisten 31 und 32 ist die Klemmvorrichtung 14 angeordnet und gehalten. Zwischen den unteren freien Enden der beiden vorderen Leisten 31 und 32 verläuft eine Schwenkachse 36, an der zwei Betätigungshebel 37 und 38 der Klemmvorrichtung 14 schwenkbar gehalten sind. Die als Schaftschraube ausgebildete Schwenkachse 36 ist durch eine Bohrung 41 bspw. der Leiste 31 gesteckt und in eine Gewindebohrung 42 bspw. der anderen Leiste 32 einschraubbar. Die beiden Betätigungshebel 37, 38 besitzen einander zugewandte angeformte Hülsenansätze 43, 44, die mit einer Bohrung 45 im einen Ende des Betätigungshebels 37, 38 fluchten und mit denen die Betätigungshebel 37, 38 auf der Schwenkachse 36 sowohl schwenkbar als auch auf Abstand gehalten sind, deren innere Enden aneinander anliegen.

Da die beiden Betätigungshebel 37, 38 spiegelbildlich zur Schnittachse III-III der Fig. 1 ausgebildet sind, braucht im foglenden deren Verbindung zum beweglichen unteren Endteil 33, 34 der Fassung 17, 18 nur einmal beschrieben werden.

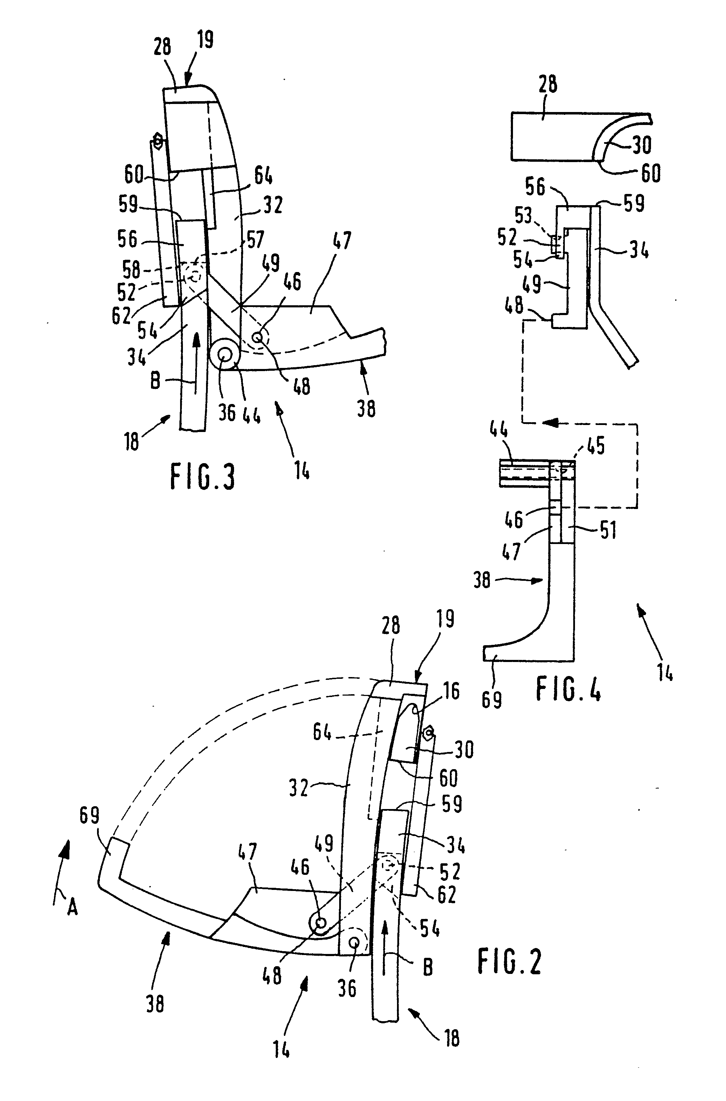

Der Betätigungshebel 37, 38 besitzt in einem Abstand zur Schwenkbohrung 45 und zu seiner Längsrichtung nach innen vesetzt an einem inneren dünneren Ansatz 47 eine weitere Bohrung 46, in die eine erste Schwenkachse 48 am einen Ende eines Zwischenhebels 49 eingreift. In montiertem Zustand ist der Zwischenhebel 49 im durch den dünneren Ansatz 47 gebildeten Rücksprung 51 des Betätungshebels 37, 38 aufgenommen. Das andere Ende des Zwischenhebels 49 ist mit einer zweiten Schwenkachse 52 versehen, die wie die erste Schwenkachse 48 als seitlich vom Zwischenhebel 49 abstehender Zapfen ausgebildet ist. Diese zweite Schwenkachse 52 wird in einer Bohrung 53 einer Lasche 54 eines Schieberblocks 56 aufgenommen, der mit dem betreffenden unteren Endteil 33, 34 der Fassung 17, 18 fest verbunden ist. Dieser Schieberblock 56 liegt in derselben Ebene wie der betraffende Endteil 33, 34 und besitzt im wesentlichen dieselbe Dicke wie die Fassung 17, 18. Wie der Fig. 4 zu entnehmen ist, ist der Zwischenhebel 49 einstückig geformt und an seinem, die zweite Schwenkachse 52 aufweisenden Ende derart ausgestaltet, daß seine Endstirn 57 an der gegenüberliegenden Innenfläche des Schieberblocks 56 unmittelbar anliegt. Die Montage dieser zweiten Schwenkachse 52 innerhalb des Schließblocks 56 erfolgt in der Weise, daß die Lasche 54 zum Einsetzen der zweiten Schwenkachse 52 nach außen gebogen und danach wieder nach innen gebogen wird. Außerdem ist dieser Fig. 4 zu entnehmen, daß die Endstirn 58 des Schieberblocks 56 in der Ebene der Stirn 59 des unteren Endteils 33, 34 liegt, welche der Stirn 60 des jeweiligen oberen Endteils 29, 30 gegenüberliegt.

Wie den Fig. 2 und 3 insbesondere zu entnehmen ist, sind den Leisten 31, 32 gegenüberliegend am Querteil 28 der Brücke 19 hintere Schienen 61, 62 befestigt. Die Schienen 61, 62 verlaufen parallel in einem Abstand der Dicke der Fassung 17, 18 zu den Leisten 31, 32, sind jedoch breiter als die Leiste 31, 32, so daß jede Schiene 61, 62 auch den zugeordneten Schieberblock 56 überdeckt. Die Schiene 61, 62 ist jedoch kürzer als die Leiste 31, 32. Der Schiene 61, 62 gegenüberliegend ist nur den Schieberblock 56 überdeckend und gegenüber der Vorderseite der Leiste 31, 32 zurückgesetzt jeweils·eine weitere Führungsschiene 63, 64 vorgesehen, die wiederum kürzer als die Schiene 61, 62 ist und die ebenfalls der Führung des zugeordneten Schieberblocks 56 dient.

Der erwähnte Rücksprung zwischen der Vorderfläche der Leiste 31, 32 und die Führungsschiene 63, 64 dient zur Aufnahme des Betätigungshebels 37 bzw. 38 in Schließstellung. Dabei besitzt der Betätigungshebels 37, 38 ein verbreitertes freies, winkelförmiges Ende 68, 69, das in geschlossenem Zustand der Klemmvorrichtung 14 das Querteil 28 übergreift. Im Bereich dieser freien Enden 68, 69 ist zwischen den beiden Betätigungshebeln 37, 38 ein Einsatz 70 für Schmucksteine, Werbeembleme oder dgl. vorgesehen, der mit Hilfe eines Gewindestiftes am Querteil 28 auswechselbar befestigt ist.

Die Funktion der Klemmvorrichtung 14 ist folgende: Gemäß Fig. 2 ist der Betätigungshebel 38 in geöffnetem Zustand, so daß über den Zwischenhebel 49 das untere Endteil 34 der Fassung 18 in einem bestimmten Abstand vom zugeordneten oberen Endteil 30 nach unten verschoben ist. Auf diese Weise ist die Fassung 18 aufgeweitet, so daß entweder ein Glas entnommen oder ein Glas eingesetzt werden kann. Wird ein Glas 12 eingesetzt, so wird dies in die Bereiche der Innennute 16, die den beiden Endteilen 30 und 34 der Fassung 18 gegenüberliegen, eingeschoben und dort zunächst von Hand gehalten. Wird dann der Betätigungshebel 38 in Richtung des Pfeiles A nach oben verschwenkt, so bewegt sich das mit der zweiten Schwenkachse 52 versehene Ende des Zwischenhebels 49 und damit auch der mit ihm verbundene Schieberblock 56 und das mit dem Schieberblock 56 verbundene untere Endteil 34 in Richtung des Pfeiles B nach oben. Während dieser Bewegung wird der Schieberblock 56 zwischen den beiden Schienen 62 und 64 geführt gehalten. In einer Schwenkstellung des Betätigungshebels 38 bzw. von dessen Ende 69 nahe der Brücke 19 sind die beiden Bohrungen 45 und 46 in einer Ebene, so daß ein weiteres Drücken des Betätigungshebels 38 zu einem Schnappeffekt und dabei zu einer gewissen Arretierung führt. Außerdem ist bei diesem Ausführungsbeispiel vorgesehen, daß das freie Ende 68, 69 des Betätigungshebels 37, 38 über das Querteil 28 elastisch verrastet. In dieser geschlossenen Stellung des Betätigungshebels 37, 38 ist die Stirn 59 des unteren Enteils 33, 34 an die Stirn 60 des oberen Enteils 29, 30 gedrückt, so daß die Fassung 17, 18 zusammengezogen und das betreffende Glas 12, 13 in der Fassung 17, 18 gehalten ist. Diese geschlossene Stellung ist in der linken Hälfte der Fig. 1 dargestellt.

**Ansprüche**

1. Brille mit zwei separaten Gläsern, die in der Innennute von zwei mit einer Brücke verbundenen umlaufenden Fassungen eines Brillengestells gefasst sind, von denen jede Fassung an zwei einander benachbarten Stellen zwischen der Brücke und Nasenauflagepads mittels einer Klemmvorrichtung zum Einlegen des Glases aufweitbar und zum Festhalten des Glases zusammenziehbar ist, wobei die Klemmvorrichtung für die Fassungen mindestens einen Betätigungshebel besitzt, der mit der mit der Brücke fest verbundenen ortsfesten Stelle der geteilten Fassung gelenkig verbunden ist und in einem Abstand davon mit einem Zwischenhebel, der andernends an der beweglichen Stelle der Fassungen angreift, achsparallel schwenkbar verbunden ist, **dadurch gekennzeichnet**, daß die Brücke (19) mit mindestens einer senkrecht zur ihr verlaufenden und die benachbarten Stellen (29,30,33,34) der geteilten Fassungen (17,18) überragenden Leiste (31,32) fest verbunden ist, an deren freiem Ende der mindestens eine Betätigungshebel (37,38) angelenkt ist, daß die Anlenkung des Betätigungshebels (37,38) an der ortsfesten Stelle (29,30) der geteilten Fassung (17,18) in Bewegungsrichtung der beweglichen Stelle (33,34) der geteilten Fassung (17,18) hinter der Anlenkung des Zwischenhebels (49) an dieser beweglichen Stelle angeordnet ist, und daß der mindestens eine Betätigungshebel (37, 38) in seiner die Gläser (12,13) festhaltenden Geschlossenstellung an der Brücke (19) arretierbar ist.

2. Brille nach Anspruch 1, dadurch gekennzeichnet, daß an den einander zugewandten Bereichen (29,30,33.34) der beiden Fassungen (17,18) zwei parallele Leisten (31,32) vorgesehen sind, deren freie Enden mit einer Schwenkachse (36) für zwei parallele Betätigungshebel (37,38) verbunden sind.

3. Brille nach Anspruch 2, dadurch gekennzeichnet, daß die Betätigungshebel (37,38) mit aneinander anliegenden Abstandshülsen (43,44) einstückig sind.

4. Brille nach einem der Ansprüche 1 bis 3, dadurch gekennzeichnet, daß der bzw. den Leisten (31,32) gegenüberliegend jeweils eine parallele Gegenschiene (61,62) angeordnet ist, die mit der Brücke (19) fest verbunden ist.

5. Brille nach einem der Ansprüche 1 bis 4, dadurch gekennzeichnet, daß der Zwischenhebel (49) an seinem dem Betätigungshebel (37,38) abgewandten Ende mit einem Schieberblock (56) schwenkbar verbunden ist, der mit der anderen Stelle (33,34) des geteilten Umfangsbereichs (26,27) der betreffenden Fassung (17,18) starr verbunden ist und mit dieser in einer Ebene liegt.

6. Brille nach den Ansprüchen 4 und 5, dadurch gekennzeichnet, daß die Gegenschiene (61,62) eine der Breite der Fassung (17,18) und des Schieberblocks (56) entsprechende Breite aufweist.

7. Brille nach einem der Ansprüche 2, 4 oder 5, dadurch gekennzeichnet, daß der Gegenschiene (61,62) gegenüberliegend die Leiste (31,32) mit einem seitlich abstehenden Führungsansatz (63,64) versehen ist, zwischen dem und der Gegenschiene (61,62) der Schieberblock (56) geführt ist.

8. Brille nach Anspruch 5, dadurch gekennzeichnet, daß der Zwischenhebel (49) am Schieberblock (56) unmittelbar anliegt.

9. Brille nach einem der Ansprüche 1 bis 8, dadurch gekennzeichnet, daß in Richtung der geschlossenen Stellung des Betätigungshebels (37,38) gesehen die Schwenkachse (48) des Zwischenhebels (49) am Betätigungshebel (37,38) vor der Schwenkachse (36) des Betätigungshebels (37,38) an der anderen Stelle (29,30) des Umfangsbereichs (26,27) der Fassung (17,18) liegt.

10. Brille nach einem der Ansprüche 1 bis 9, dadurch gekennzeichnet, daß das freie Ende des Betätigungshebels (37,38) mit einer Nase (68,69) versehen ist, die über die Brücke (19) rastbar ist.

11. Brille nach einem der Ansprüche 1 bis 10, dadurch gekennzeichnet, daß der Zwischenhebel (49) ein mit seinen Schwenkachsen (48,52) einstükkig versehenes Bauteil ist, daß der Schieberblock (56) mit einem biegbaren Lappen (54) versehen ist, der eine Schwenkachsenöffnung (43) aufweist, und daß der Betätigungshebel (37,38) einen mit einer Schwenkachsenöffnung (46) versehenen dünnwandigen Ansatz (47) besitzt.

FIG.1

EP 0 308 696 A1

FIG.3

FIG.4

FIG.2

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| D,A | US-A-2 730 012  (R. MALCOLM)<br>* Ansprüche *<br>--- | 1 | G 02 C   1/08 |
| A | FR-A-1 090 623  (R. GOUILLOUX)<br>* Ansprüche *<br>--- | 1 | |
| A | US-A-2 754 724  (S. FISHMAN)<br>* Ansprüche *<br>--- | 1 | |
| A | BE-A-  546 048  (N.G. GRENIER)<br>* Ansprüche *<br>--- | 1 | |
| A | DE-B-1 214 020  (SOCIETE DES LUNETIERS COTTET)<br>----- | | |

RECHERCHIERTE
SACHGEBIETE (Int. Cl.4)

G 02 C

Der vorliegende Recherchenbericht wurde für alle Patentansprüche erstellt

| Recherchenort | Abschlußdatum der Recherche | Prüfer |
|---|---|---|
| DEN HAAG | 09-12-1988 | CALLEWAERT-HAEZEBROUCK H |